**Europäisches Patentamt**

**European Patent Office**

**Office européen des brevets**

(11) Numéro de publication : **0 516 867 B1**

(12) # FASCICULE DE BREVET EUROPEEN

(45) Date de publication du fascicule du brevet :
**16.03.94 Bulletin 94/11**

(51) Int. Cl.⁵ : **A23P 1/02,** A23L 1/164,
A23L 1/18, A21D 6/00

(21) Numéro de dépôt : **91108800.3**

(22) Date de dépôt : **29.05.91**

(54) **Procédé de préparation de granulés pasteurisés à partir d'une farine de céréales.**

(43) Date de publication de la demande :
**09.12.92 Bulletin 92/50**

(45) Mention de la délivrance du brevet :
**16.03.94 Bulletin 94/11**

(84) Etats contractants désignés :
**AT BE CH DE DK ES FR GB GR IT LI LU NL SE**

(56) Documents cités :
**FR-A- 2 294 653**
**FR-A- 2 351 603**
**GB-A- 1 068 410**
**US-A- 4 131 689**

(73) Titulaire : **SOCIETE DES PRODUITS NESTLE S.A.**
**Case postale 353**
**CH-1800 Vevey (CH)**

(72) Inventeur : **Buhler, Marcel**
**La Musardière**
**CH-1111 Tolochenaz (CH)**
Inventeur : **Venries, Bernard**
**Au Revelin**
**CH-1422 Grandson (CH)**

## Description

La présente invention est relative à un procédé de préparation de granulés pasteurisés par traitement d'une farine de céréales, lesdits granulés pasteurisés permettant l'obtention, d'une part, d'une farine pasteurisée, et d'autre part, de granulés soufflés plus particulièrement destinés aux petits déjeuners.

On connaît, par le document EP 12 813, un procédé de stérilisation d'épices dans lequel une masse à stériliser est passée dans un extrudeur au travers d'une filière à une température de préférence comprise entre 90 et 110°C pendant une durée de 1 à 120 secondes, préférablement de 15 à 30 secondes. Le procédé ci-dessus présente comme principal inconvénient de devoir utiliser un extrudeur qui est à la fois cher, d'entretien délicat et mécaniquement complexe.

On connaît également par FR 2,351,603 un procédé permettant d'améliorer le stockage de farines de céréales par réduction de leur activité enzymatique, procédé dans lequel on compresse ladite farine contre une surface percée.

Toutefois, ce document ne dit rien concernant les éventuelles qualités des granulés compacts obtenus, en particulier concernant leurs qualités bactériologiques ou leur propension à être soufflés.

La présente invention a pour but de proposer un procédé de traitement d'une farine de céréales évitant l'emploi d'un extrudeur et qui s'affranchit de l'utilisation d'une source de chaleur.

La présente invention a pour objet un procédé de préparation de granulés pasteurisés dans lequel une farine de céréales est comprimée contre une surface perforée d'un granulateur de manière à produire des granulés compacts pasteurisés.

Il revient à la demanderesse le mérite d'avoir trouvé, d'une part, que les granulés compacts obtenus par ce procédé étaient pasteurisés et présentaient d'autre part une certaine aptitude au soufflage.

Il convient ici de faire une différence entre stérilisation et pasteurisation. La présente invention n'a pas pour but de détruire tous les germes présents dans le produit initial, ce qui serait une stérilisation, mais a seulement pour but de supprimer les germes qui rendraient le produit impropre à la consommation.

Il a été en effet trouvé, contre toute attente, que les granulés produits par l'opération de compression de la farine présentaient des caractéristiques bactériennes tout à fait exceptionnelles. Il suffit ensuite, si l'on désire obtenir une farine pasteurisée, de broyer à sec les granulés obtenus.

De plus, la présente invention permet de réduire l'activité enzymatique du produit traité.

En effet, de façon surprenante, il a été constaté que le procédé selon la présente invention permet de réduire l'activité enzymatique dans un processus par voie sèche. Plus particulièrement, il a été constaté qu'en mesurant l'activité enzymatique pour les lipases, lipoxydases, peroxydases et béta-amylases, on obtient grâce au traitement selon l'invention une réduction de l'activité enzymatique comprise entre 40% et 60%.

Le produit traité par le procédé selon l'invention présente donc des caractéristiques de stockage considérablement améliorées par la réduction de cette activité enzymatique.

Un autre but de la présente invention est de proposer un procédé de fabrication de granulés soufflés à base de céréales.

Il est en effet connu de pouvoir souffler directement des grains de maïs ou de riz.

En revanche, d'autres céréales, telles que le blé tendre, ne peuvent pas être directement soufflées. Ceci est en particulier dû à une teneur en amidon insuffisante.

On a proposé, par exemple par le document GB 1.068.410, un procédé pour la production de granulés soufflés à base de céréales dans lequel, dans une première étape, on mélange une farine de céréales avec des additifs comme de l'amidon puis on ajoute de l'eau pour obtenir une pâte.

Cette pâte est ensuite cuite, à la vapeur, avant d'être extrudée et découpée en morceaux qui sont ensuite séchés et soufflés selon un procédé connu.

La présente invention a donc aussi pour but de proposer un procédé de fabrication de granulés soufflés à base de céréales, qui ne sont normalement pas soufflables à l'état de graine, qui évite par ailleurs les opérations de cuisson et d'extrusion qui sont à la fois longues et onéreuses, ce procédé permettant par ailleurs de supprimer la phase de séchage préalable au soufflage.

Un autre objet de la présente invention consiste ainsi en un procédé de fabrication de granulés soufflés à base de céréales dans lequel une farine présentant une humidité comprise entre 10% et 25% en poids est comprimée contre une surface perforée les granulés obtenus étant ensuite soufflés.

Il a été en effet trouvé, contre toute attente, que les granulés produits par l'opération de compression de la farine humide, d'une part, ne se désintégraient pas lors de l'opération de soufflage, mais, d'autre part, présentaient un gonflement tout à fait satisfaisant et une forme comparable à celle obtenue par le soufflage de céréales entières comme des grains de maïs.

Par ailleurs, les granulés obtenus à partir d'une farine de blé présentent, une fois soufflés, les caractéristiques organoleptiques de grains de maïs soufflés aussi appelés "pop corn".

La teneur en eau de la farine traitée pour la mise en oeuvre du procédé est bien entendu dépendante de la farine elle-même, des additifs qui peuvent être éventuellement incorporés et du degré d'expansion que l'on veut obtenir lors de l'opération de soufflage.

Il peut être ainsi intéressant de modifier l'humidité naturelle de la farine avant la phase de compression.

De même, l'ampleur de la compression est bien entendu fonction de l'expansion désirée lors du soufflage ainsi que de l'humidité de la farine.

Il est possible de définir la compression en mesurant la dureté du granulé produit qui peut être comprise entre 280 Newton et 400 Newton, mesurée sur un appareil Instron 1121.

Il apparaît que, pour résister au soufflage, les granulés doivent être suffisamment comprimés pour éviter une explosion et un retour à l'état de poussière du produit. En revanche, une compression trop importante entraîne des variations de forme lors de l'expansion du produit.

Ces limites supérieure et inférieure sont fonction de la composition exacte des granulés et sont facilement déterminables par l'expérimentation.

Les exemples ci-dessous illustreront la mise en oeuvre de l'invention.

Exemple 1 :

Cet exemple illustre la pasteurisation obtenue grâce au procédé selon l'invention.

Les farines sont traitées dans une presse de granulation du type DPFL fabriquée par BUHLER.

Dans ces essais ont été mesurés :
- l'humidité initiale de la farine
- l'humidité finale après granulation
- le débit horaire moyen
- le nombre total de germes au départ et après le traitement
- la présence ou l'absence de coliformes.

Les résultats sont résumés dans les tableaux ci-dessous, la quantité de germes totaux étant exprimée en nombre de germes par gramme.

## Tableau 1

### Conditions de traitement

| Essai | Farine de base | Humidité initiale (%) | Humidité finale (%) | Debit (kg/h) | Filière (diamètre x profondeur en mm ) |
|---|---|---|---|---|---|
| 1 | Farine flûte | 16.64 | 16.17 | 65 | 3x15 |
| 2 | Farine flûte | 13.36 | 13.04 | 66 | 3x20 |
| 3 | Farine flûte | 18.78 | 18.08 | 83 | 3x15 |
| 4 | Farine flûte | 18.78 | 18.08 | 102 | 4.8x25 |
| 5 | Farine flûte avec avoine et sucre | 13.87 | 13.42 | 91 | 4.8x25 |
| 6 | Farine flûte avec avoine et sucre | 13.96 | 13.24 | 71 | 8x32 |
| 7 | Riz | 15.46 | 14.14 | 68 | 4.8x25 |

Tableau 2

Pasteurisation obtenue

| Essai | Germes totaux initiaux (par g) | Présence initiale de coliformes (Oui/Non) | Germes totaux après traitement (par g) | Présence finale de coliformes (Oui/Non) |
|---|---|---|---|---|
| 1 | 570000 | | 5600 | |
| 2 | 380000 | | 15000 | |
| 3 | 9000 | Oui | 170 | Non |
| 4 | 9000 | Oui | 390 | Non |
| 5 | 600 | Oui | 90 | Non |
| 6 | 600 | Oui | 80 | Non |
| 7 | 33000 | Oui | 25000 | Non |

Les essais 1 et 2 ont été réalisés avec addition d'une culture de bactéries ce qui explique le nombre très élevé de germes, dans ces essais il n'a pas été fait de tests relatifs à la présence de coliformes.

Ces essais montrent clairement que l'effet obtenu est bien une pasteurisation, comme le montre en particulier l'exemple 7 où les coliformes ont disparus alors que la quantité de germes présents demeure importante.

Exemple 2 :

Une farine blanche, du type flûte, et présentant une humidité de 18% en poids après humidification, a été traitée dans une presse de granulation du type DPFL de BUHLER.

Le débit a été fixé à 40 kg/h et la filière de la presse présentait des orifices de 3 mm de diamètre et une épaisseur de 15 mm.

Cette farine présentait au départ 10'000 germes/g.

Après l'opération de compression, les granulés obtenus ne présentaient plus que 40 germes/g.

La température des granulés, mesurée par diffusion de la masse dans un récipient, était d'environ 60°C et l'humidité des granulés était de 15%, environ 10% de l'humidité initiale ayant été perdue par la détente réalisée à la sortie de la filière du granulateur.

Le degré de gélatinisation était passé de 22%, dans la farine, à 36% dans les granulés qui présentaient une dureté de 310 Newton mesurée par un appareil Instron 1121 sur dix échantillons de 0,5 grammes.

Ces granulés ont ensuite été soufflés dans une machine Sacchi type Scori 110, à un débit de 200 kg/h, avec un préchauffage de 110°C et une température du canon de 180°C.

Les granulés se sont alors expansés sans désintégration en présentant par ailleurs moins de 10 germes/g.

Le produit obtenu présentait les qualités organoleptiques du "pop corn" avec un taux de gélatinisation de 99,6%.

Exemple 3 :

Un mélange constitué de 9 parties en poids de farine de riz et de 1 partie en poids de protéines sériques ultrafiltrées a été additioné de 7% en poids d'eau. Ce mélange présentait alors une humidité de 15.4% en poids.

Ce mélange a été traité dans une presse de granulation de type DPFL, fabriquée par BUHLER, à un débit de 68 kg/h, la filière de la presse ayant des orifices de 4,8 mm de diamètre et une épaisseur de 25mm.

Après granulation, l'humidité du produit était de 14,1% en poids.

Ces granulés ont ensuite été soufflés dans une machine Sacchi de type Scori 110 à un débit de 200 kg/h avec un préchauffage de 115°C. Les granulés se sont alors expansés d'un facteur 3,9 sans dèsintégration, le produit final présentant une densité apparente de 180 g/l et une teneur en eau de 9,72% en poids.

Ce produit était bien structuré et ne s'est pas défait dans l'eau froide.

4

Exemple 4 :

Un mélange constitué de 3 parties en poids de farine de blé flute, 3 parties en poids de farine d'avoine, 1 partie en poids de sucre et 3 parties en poids de protéines sériques ultrafiltrées présentait une humidité de 13,9% en poids.

Ce mélange a été traité à un débit de 90 kg/h sur une presse identique à celle de l'exemple précédent. Les granulés obtenus présentaient alors une humidité de 13,3% en poids.

Ces granulés ont été ensuite soufflés dans le même dispositif et dans les mêmes conditions qu'à l'exemple précédent. Les granulés se sont expansés d'un facteur 1,8 sans désintégration et présentaient une densité apparente de 360 g/l.

Le produit bien structuré ne se défaisait pas dans l'eau froide.

Exemple 5 :

Une farine de blé du même type que celle de l'exemple 2 a été portée à une humidité de 23%, toutes choses égales par ailleurs.

Les granulés obtenus par le granulateur, fonctionnant dans les mêmes conditions qu'à l'exemple 1, présentaient une humidité de 21%. Les granulés, dans un récipient, présentaient une densité apparente de 710 g/l. Après soufflage leur densité apparente était de 100 g/l.

Le produit bien structuré ne se défaisait pas dans l'eau froide.

**Revendications**

1.  Procédé de préparation de granulés pasteurisés dans lequel une farine de céréales est comprimée contre une surface perforée d'un granulateur de manière à produire des granulés compacts pasteurisés.

2.  Procédé de préparation selon la revendication 1 dans lequel la farine de céréales présente, avant compression, une humidité de 10-25% en poids et dans lequel les granulés compacts pasteurisés sont ultérieurement soufflés, la dureté des granulés étant adaptée pour permettre un soufflage sans explosion du produit.

3.  Procédé de préparation selon la revendication 1 dans lequel les granulés compacts pasteurisés sont ensuite broyés de manière à obtenir une farine pasteurisée.

**Patentansprüche**

1.  Verfahren zur Herstellung von pasteurisiertem Granulat, bei dem ein Getreidemehl gegen eine perforierte Fläche eines Granulators komprimiert wird, so daß ein kompaktes pasteurisiertes Granulat erzeugt wird.

2.  Verfahren nach Anspruch 1, bei dem das Getreidemehl vor der Komprimierung eine Feuchtigkeit von 10-25 Gew.-% besitzt und das kompakte pasteurisierte Granulat anschließend aufgebläht wird, wobei die Härte des Granulats so groß ist, daß ein Aufblähen des Produkts ohne Platzen möglich ist.

3.  Verfahren nach Anspruch 1, bei dem das kompakte pasteurisierte Granulat anschließend zur Bildung eines pasteurisierten Mehls gemahlen wird.

**Claims**

1.  A process for the production of pasteurized granules in which a cereal flour is compressed against a perforated surface of a granulator to produce pasteurized compacted granules.

2.  A process as claimed in claim 1, in which the cereal flour has a moisture content before compression of 10 to 25% by weight and in which the pasteurized compacted granules are subsequently expanded, the hardness of the granules being adapted to allow expansion without explosion of the product.

3.  A process as claimed in claim 1, in which the pasteurized compacted granules are then crushed to obtain

a pasteurized flour.